# EUROPEAN PATENT APPLICATION

(11) **EP 1 172 993 A2**
(43) Date of publication of application: **16.01.2002**
(21) Application number: 01116937.2
(22) Date of filing: 11.07.2001
(51) Int. Cl.: H04M 3/493

(54) **Directory assistance system for users of a mobile telephone**

(30) Priority: 14.07.2000 IT VE000033
(71) Applicant: Barbanti, Diego, 30170 Mestre (Venezia) (IT); Florean, Francesco, 30024 Musile di Piave (Venezia) (IT)
(72) Inventor: Barbanti, Diego, 30170 Mestre (Venezia) (IT); Florean, Francesco, 30024 Musile di Piave (Venezia) (IT)
(74) Representative: Bettello, Pietro, Dott. Ing.

(57) **Abstract**

The object of the present finding is a system which allows users of mobile telephone networks, using a cellular telephone apparatus, to query a computerised list capable of providing information relative to the subscribers to the mobile telephone services. A user who wishes to make use of this service sends a request through a cellular apparatus and the system, once the requested information has been found, sends it to the user who receives it as a reply. The request can regard the supply of telephone numbers (pertaining to mobile telephones) based upon a name or, vice versa, the supply of one or more names based upon a number (Fig.1).

## Description

The present finding regards the realisation of a computerised element for users of mobile telephone services.

Up until now convincing replies have not been given to one of the most common questions that a user of one of any of the existing networks can ask: to know through a cellular phone, in a short time, what is the cellular telephone number corresponding to a certain name or, where there are homonyms, to a certain identifying co-ordinate number (street and town of residence and other data).

In order to be able to reach a cellular number again, the holder of a cellular phone number must use personal archives - on paper or magnetic means which are housed in the same telephone card (SIM card in the case of GSM) or in the same cellular telephone - which are maintained by the person himself, with a serious risk of irremediable loss of the data in the case of loss, theft, the card breaking, cancellation and like.

Moreover it is certain that a non-negligible percentage of users of mobile networks would gain substantial advantages if their own telephone number were, in some way, made available to whoever, in determined circumstances, needed it: this is the case, for example, of work cellular phones of people who carry out functions of the commercial type with clientele, or of particularly operative functions such as the operation of a service following a phone call.

The aim of the present finding is to allow a user to consult in a completely computerised way a list of subscribers to mobile telephone services.

Further characteristics of the finding will be shown by a description, given for indicating and not limiting purposes, and schematised in the following figures.
Fig.1 illustrates the main general operation of the computerised mobile telephone list which can be used from cellular phone apparatus;
Fig.2 shows a general diagram for the device in question (block 4 of fig.1);
Fig.3 shows the first of the basic configurations, indicated as single block configuration;
Fig.4 illustrates the block diagram of the second basic configuration of the interface between the outside world and the device, indicated as multiple block configuration;
Fig.5 regards a possible functional diagram for asking questions (block 7 of fig.2).

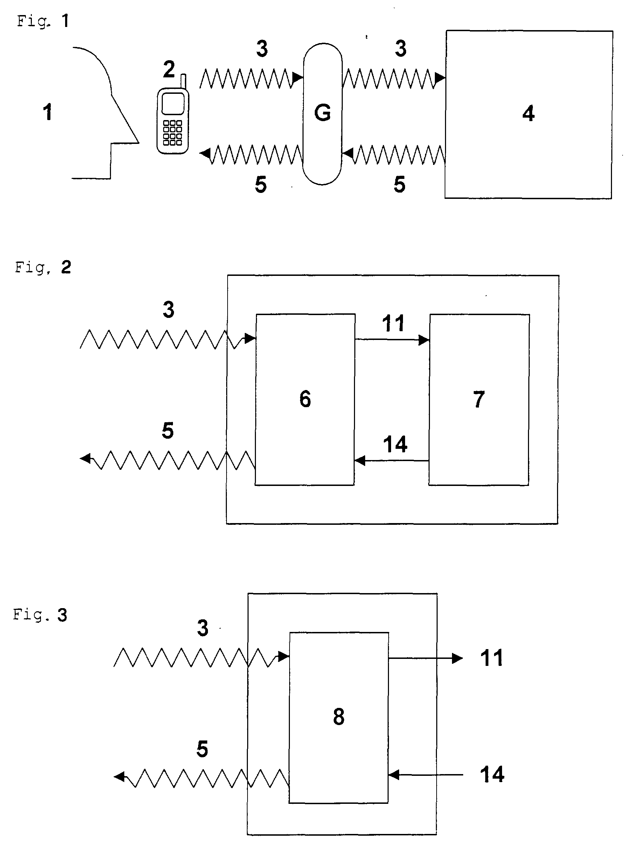

With reference to fig.1 are defined: a user 1 which, through cellular apparatus 2, sends an electric signal 3, encoded in a suitable way, according to a request, to a cellular network provider G which takes measures to send such a request 3 to the device in question 4; these, once a reply 5 to the original question 3 has been found, addresses it, sending an electric signal encoded in a suitable way through the network of the provider G, to the user 1.

The network providers are, up to now, licensees of the mobile telephone service, foreseen both in national and international norms and are necessary for guaranteeing above all the coverage of the service over vast areas of the national territory.

We emphasise that the presence of one or more providers, in the description of the finding, is optional, in that it does not limit the innovative principles of it and allows the described design to be adapted to the current state of the art in the field of cellular phones. Basically, the proposed finding foresees both the presence and the absence of the provider "G" in the operation design.

Following on from this it is understood that: both the request signals from the user and the reply signals to the user will pass, before arriving at the object of the finding, through one or more devices belonging to one or more cellular network providers.

The electric request and reply signals satisfy the requirements from one or more transmission standards linked to the mobile telephone systems currently in use, such as: GSM (Global System for Mobile Communication), WAP (Wap Wireless Application Protocol), GPRS (General Packet Radio Services), SMS (Short Message Service), UMTS (Universal Mobile Telecommunications System), allowing the transmission of the information contained in analogue and/or digital form, using one or more encoded languages distinguishing themselves by their own alphabet and relative dictionary, by precise syntactic, grammatical and semantic rules.

In fig.2 there is: an apparatus 6, characterised in that it has a double function of receiving input requests 3 and sending the corresponding replies 5 to the respective senders; such apparatus is the interface between the outside world and the device; a device 7, said request computer, capable of interpreting and handling requests 11 originating from block 6 and of sending the relative elaborated replies 14 to it.

The system, however, allows the reply to the corresponding requests to be sent with a time delay, instantly or as a combination of the two.

The interface between the outside world and the device, schematised by block 6, carries out the task of receiving the request signals 3 from the users, converting them from the original protocol into a suitable chosen internal format, sending such modified requests 11, in an ordered way, to the request computation and, finally, of converting the reply signals 14, obtained from the computer in internal format, into replies 5 encoded in a suitable format and of sending them to the respective users.

The interface between the outside world and the device can, in turn, be broken down into two distinct base configurations of functional sub-blocks or a combination of these.

In fig.3 we note that, in a first basic configuration, the interface between the outside world and the device is made up of a single block 8 capable of managing both the reception of requests 3, and the sending of the corresponding replies 5 once these have been determined by the request computer (block 7 of fig.2).

The requests 3, received by the interface between the outside world and the device 8, are translated into internal format and sent (11) to the request computer, which sends back the replies encoded in internal format 14 which will again be translated into a suitable format and sent as replies 5 to the user.

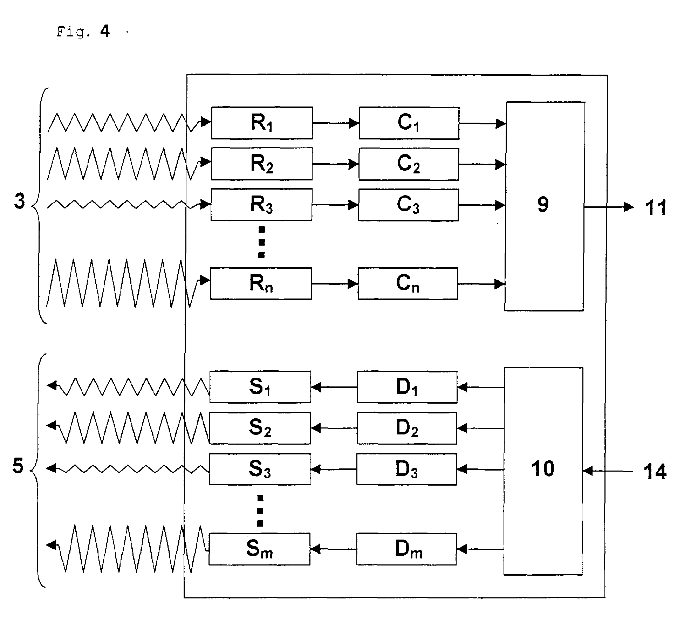

In fig.4 one sees that, in a second embodiment the interface is composed of two series of blocks: the first, made up of blocks Rn, Cn and 9, having the function of receiving the requests 3, translating them into internal format and sending them (11), in an ordered way, to the request computation; the second, made up of blocks 10, Dm and Sm, with the function of receiving the replies 14, obtained from the request computer, and sending them, in a suitable format, as replies 5 to the users.

In the first series of blocks are defined one or more devices Rn, called receivers, each one different, and capable of receiving the request signals 3 in a specific protocol and making the useful digital part of the signal, encoded in the form foreseen by the transmission protocol, available in output. Associated with each block Rn there may be a block Cn, called a converter, capable of carrying out a conversion of the signal coming from the corresponding receiver in internal format.

Clearly, if a receiver Rn is capable of providing a signal which is already in internal format the corresponding converter is rendered useless and can thus also not be present in the diagram.

The block 9 carries out the task of conveying all the requests obtained from the converters and/or the receivers and of transmitting them (11), in an ordered manner, to the request computer (block 7 of fig.2).

The second series of blocks behaviour mirrors that of the first: the block 10 carries out the task of sorting the replies 14 to the requests coming from the request computer towards the devices Dm, called decoders, which convert the replies from internal format into the necessary codifications to feed into blocks Sm.

In the same way as was shown previously for the blocks Cn and Rn, also in this case the blocks Dm can be left out in the case in which the corresponding blocks Sm do not require a conversion of the replies 14.

Said transmitters are each different from the others and are each capable of sending the replies 5 in the suitable transmission protocol.

As a non-limiting illustrative example one can think of realising the interface between the outside world and the device using a receiver R made up of an "SMS to mail gateway" device, capable of receiving requests in "SMS" format and of converting them into "SMTP" form, and as converter C, a software programme capable of translating data from "SMTP" format into an internal format, for example suitable for being used by an electronic computer.

The blocks 9 and 10 can be realised with software programmes operating on an electronic computer; still using a software programme the decoder D can be realised which converts the replies encoded in internal form obtained from the block 10 into "SMTP" format.

At this point the transmitter S will be made up of a "mail to SMS gateway" device capable of sending the reply to the user as an SMS message.

In this example deliberate reference is made to distinct software programmes to better emphasise the functions which they carry out but, still in general terms, one can consider, as a possible embodiment, a single programme which carries out all the functions.

The two configurations just illustrated and described can be combined together to create the interface between the outside world and the device.

It must be emphasised, however, the use of the two basic configurations considered individually or combined constitutes an equivalence from a functional point of view for the block in question.

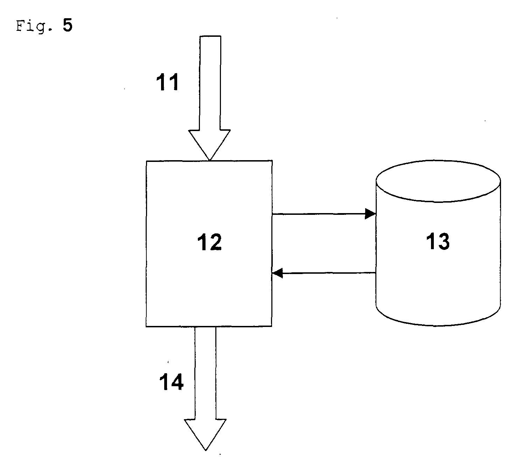

In fig. 5 one can see that the request computer is realised through a device capable of receiving an ordered flow of requests in internal format, elaborating them generating a reply for each of them in accordance with predetermined principles and criteria and, finally, sending the replies to the interface between the outside world and the device.

In fig.5 are defined: the flow of requests in internal format 11, coming from the interface between the outside world and the device, the block 12 made up of a device capable of elaborating the requests using a reference database 13 in which the information relative to the subscribers to the computerised list is filed and producing, according to predetermined principles and criteria, a flow of replies 14.

It can be asserted, as an example and still in general terms, that the block 12 is a typical electronic computer, structured with the standard foreseen components: CPU, I/O device, RAM, ROM, Mass memory on magnetic, optical or other supports, equipped with basic software, systems and applications which are sufficient to achieve the aims described above.

The embodiment just described represents one of many ways in which it is possible to obtain the described system and is proposed as an example, without being a limitation to the use of the equipment and the methods for the realisation of the finding.

From what has been described there are at least three advantageous aspects; the first is in favour of those users who wish to have the possibility of consulting, in a computerised manner, a list of mobile telephone users; the second aspect is advantageous to those who wish to be included in a list which can be consulted by the public (one thinks, for example, of those who have an interest in letting people know the number of their mobile for work reasons or alike).

The third aspect regards the mobile phone providers, which would see their business increase in terms of traffic.

From what has been described and illustrated one can see how the proposed aims are achieved.

Clearly, the described system can be realised in different ways, provided that they are suitable for achieving the same operation.

## Claims

1. A system which realises the function of a computerised mobile telephone list which can be used from cellular apparatus.

2. A system, according to claim 1, **characterised in that** it provides telephone numbers (pertaining to a mobile telephone system) based on a name and, vice versa, of providing one or more names based upon a number.

3. A system, according to claims 1 and 2, **characterised in that** it is capable of receiving requests from cellular apparatus, possibly propagated by devices belonging to one or more mobile telephone network providers, formulated and generated using any function allowed by the use of a cellular apparatus.

4. System for the realisation of a mobile telephone list which can be used from cellular apparatus, **characterised in that** it comprises one or more of the illustrated and described characteristics.
